# EUROPEAN PATENT APPLICATION

(11) **EP 3 101 634 A1**
(43) Date of publication of application: **07.12.2016**
(21) Application number: 14881101.1
(22) Date of filing: 29.01.2014
(51) Int. Cl.: G08B 13/14

(54) **PORTABLE ANTITHEFT DEVICE AND METHOD**

(71) Applicant: Quasion Inc., Canada, Ancaster, Ontario L9G 4R8 (CA); Wu, Xiaohua, Beijing 102211 (CN)
(72) Inventor: WU, Xiaohua, Beijing 102211 (CN); LI, Xiaolong, Beijing 102211 (CN); OUYANG, Ziyue, Beijing 102211 (CN)
(74) Representative: DREISS Patentanwälte PartG mbB
(86) International application number: PCT/CN2014/071792
(87) International publication number: WO 2015/113268

(57) **Abstract**

Disclosed in the present invention are an antitheft device and a method, the device comprising: a main control module, at least one first I/O interface, at least one second I/O interface, a connection state detection module and an alarm module. The at least one first I/O interface is connected to a protected electronic device and/or the at least one second I/O interface; the at least one second I/O interface is connected to a charger for the protected electronic device and/or the at least one first I/O interface; the connection state detection module is used for detecting the connection state of the at least one first I/O interface and second I/O interface and reporting the connection state to the main control module; the main control module judges whether the state of the at least one first I/O interface and/or second I/O interface is abnormal or not according to the interface connection state reported by the connection state detection module, and sends a trigger signal to the alarm module if the state is abnormal; and the alarm module performs an alarm action after receiving the trigger signal of the main control module.

## Description

### FIELD OF THE INVENTION

This invention relates to a portable antitheft device and method, which belongs to the antitheft technical field.

### BACKGROUND OF THE INVENTION

In order to prevent the devices and service facilities from theft when they are being showed in the public service places such as retails, exhibitions, hotels and banks, an antitheft device is used. For example, in the places where the electronic devices such as mobiles, digital cameras and tablets are being retailed or showed, mobiles are often electronically connected to an antitheft off hook device on the show stand. The customer can operate on the device directly when he wants to operate the device and learn its features, but cannot disconnect the connection between the device and the antitheft off hook device. If the electronic device is forced to disconnect, the antitheft off hook device will alarm.

But this kind of antitheft off hook device is complicated to install and not portable. The frequency of people using portable electronic devices, such as tablets and mobiles, is becoming higher, and the charging frequency is becoming higher. However, when the electronic devices are being charged, they leave peoples body and sight. What is needed is to solve the antitheft problem in such scenarios.

### Disclosure of Invention

For this reason, a portable anti-theft device is disclosed in the present invention. The device can solve the problems of the antitheft electronic device in the prior art, such as non-portability, cannot protect during the charging process and cannot not protect non-electronic device.

According to the first aspect of present invention, an antitheft device is provided, comprising:
a main control module, at least one first I/O interface, at least one second I/O interface, a connection state detection module and an alarm module;
wherein the at least one first I/O interface is connected to a protected electronic device and/or the at least one second I/O interface;
the at least one second I/O interface is connected to a charger for the protected electronic device and/or the at least one first I/O interface;
the connection detection module is used for detecting the connection state of the at least one first I/O interface and second I/O interface and reporting the connection state to the main control module;
the main control module judges whether the state of the at least one first I/O interface and/or second I/O interface is abnormal according to the interface connection state reported by the connection detection module, and sends a trigger signal to the alarm module if the state is abnormal;
the alarm module performs an alarm action after receiving the trigger signal of the main control module.

According to one embodiment of present invention, the connection state of the at least one first I/O interface and second I/O interface comprises: whether a current, voltage or their change exists in the circuit loop where the protected electronic device, charger of the protected electronic device or the other I/O interface is connected.

According to one embodiment of present invention, the antitheft device has at least one of the following antitheft modes:
self-lock antitheft mode: the at least one first I/O interface and the second I/O interface are connected to each other to form a self-lock to lock the protected item;
single-lock antitheft mode: the at least one first I/O interface and/or the second I/O interface are connected to the protected electronic device to protect the protected electronic device;
charging antitheft mode: the at least one first I/O interface and the second I/O interface are connected to the protected electronic device and the charger of the protected electronic device respectively to protect the protected electronic device which is being charged.

According to one embodiment of present invention, the main control module judges the current antitheft mode according to the connection state of the at least first I/O interface and the second I/O interface.

According to one embodiment of present invention, a mode setting module is used to set the current antitheft mode of the antitheft device.

According to one embodiment of present invention, the unlock module judges if the inputted unlock information is correct; if correct, sets its state to unlock state.

According to one embodiment of present invention, the main control module judges if the unlock module is in unlock state after sending a trigger signal to the alarm module; if the unlock module is in unlock state, turns off the alarm action of the alarm module, otherwise continues to alarm.

According to one embodiment of present invention, the antitheft device further comprises a power and power management module, which is used to supply power to the antitheft device and/or the protected electronic device.

According to one embodiment of present invention, the main control module is one of CPU, DSP and FPGA; the alarm module is one or any combination of sound alarm module and light alarm module; the unlock module is one or any combination of keyboard, Bluetooth, NFC, time switch and fingerprint detection alarm module.

According to one embodiment of present invention, the antitheft device comprises at least two first I/O interface and/or at least two second I/O interface which are respectively connected to each other or connected to different protected electronic devices and/or the charger of the protected electronic device.

According to one embodiment of present invention, the circuit loop comprises:
a circuit loop formed by the negative power supply line and the sensor line between the at least one first I/O interface and the at least one second I/O interface;
a circuit loop formed by the negative power supply line and the sensor line between the at least one first I/O interface and the protected electronic device;
a circuit loop formed by the negative power supply line and the positive power supply line between the at least one second I/O interface and charger of the protected electronic device.

According to the second aspect of present invention, an antitheft device is provided, comprising:
a main control module, at least one first I/O interface, a connection state detection module, an alarm module and a power and power management module;
wherein the at least one first I/O interface is connected to a protected electronic device;
the connection detection module is used for detecting the connection state and the charging state of the at least one first I/O interface and reporting the connection state and the charging state to the main control module;
the main control module judges whether the state of the at least one first I/O interface is abnormal according to the interface connection state and charging state reported by the connection detection module, and sends a trigger signal to the alarm module if the state is abnormal;
the alarm module performs an alarm action after receiving the trigger signal of the main control module;
the power and power management module is connected to an external power supply and used for supplying power to the antitheft device and charging the protected electronic device.

According to one embodiment of present invention, the connection state of the at least one first I/O interface comprises: whether a current, voltage or their change exists in the circuit loop where the protected electronic device is connected.

According to one embodiment of present invention, the antitheft device further comprises an unlock module, the unlock module judges if the inputted unlock information is correct; if correct, sets its state to unlock state.

According to one embodiment of present invention, the main control module judges if the unlock module is in unlock state after sending a trigger signal to the alarm module; if the unlock module is in unlock state, turns off the alarm action of the alarm module, otherwise continues to alarm.

According to one embodiment of present invention, the antitheft device comprises multiple first I/O interfaces which are respectively connected to different protected electronic devices.

According to the third aspect of present invention, an antitheft method using an antitheft device is provided, the antitheft device comprises a main control module, at least one first I/O interface, at least one second I/O interface, a connection state detection module, an alarm module and an unlock module, the method comprising:
step 1: the protected item and the antitheft device are connected and the antitheft device starts up;
step 2: the connection state detection module detects the connection states of all the I/O interfaces and reports the connection states to the main control module;
step 3: the main control module judges whether the connection state of the first I/O interface and the second I/O interface is normal according to the connection states of all the I/O interfaces; if yes, turns to step 2, otherwise turns to step 4;
step 4: the main control module triggers the alarm module to perform an alarm action;
step 5: the main control module judges if the unlock module is in unlock mode, if yes, turns to step 6, otherwise turns to step 4;
step 6: the main control module turns off the alarm action of the alarm module and turns to step 2.

According to one embodiment of present invention, the protected item is electronic device with electronic interface, and the electronic interface of the electronic device is connected to the first I/O interface or the second I/O interface of the antitheft device in step 1.

According to one embodiment of present invention, the protected item is the item which can be locked tightly by connection line, and the protected item is locked in a self-lock loop formed by the first I/O interface and the second I/O interface of the antitheft device through connection line in step 1.

According to one embodiment of present invention, the protected item is rechargeable device; the charging interface of the rechargeable device is connected to the first I/O interface of the antitheft device and the charger is connected to the second I/O interface.

According to the fourth aspect of present invention, an antitheft method which uses an antitheft device to protect the protected electronic device which is being charged is provided, the antitheft device comprises a main control module, at least one first I/O interface, a connection state detection module, a power and power management module, an alarm module and an unlock module, the method comprising:
step 1: the protected electronic device and the at least one first I/O interface of the antitheft device are connected, the antitheft device is connected to the power supply and starts up;
step 2: the power and power management module charges the protected electronic device;
step 3: the connection state detection module detects the connection state and charging state of the at least one first I/O interface and reports to the main control module;
step 4: the main control module judges whether the state of the at least one first I/O interface is normal according to the connection state and the charging state of the at least one first I/O interface; if yes, turns to step 3, otherwise turns to step 5;
step 5: the main control module triggers the alarm module to perform an alarm action;
step 6: the main control module judges if the unlock module is in unlock mode, if yes, turns to step 7, otherwise turns to step 5;
step 7: the main control module turns off the alarm module and turns to step 3.

The portable antitheft device in present invention has multiple antitheft modes. It can individually protect the protected item in self-lock mode; the protected item can be non-electronic item. In single-lock antitheft mode, it can protect the protected electronic device from theft by connecting to the interface of the electronic devices. In charging mode, it can protect the protected electronic device being charged from theft. Furthermore, the portable antitheft device in present invention can protect multiple items and have multiple antitheft modes simultaneously. The portable antitheft device in present invention is easy to carry with full features. It can be applied to many scenarios.

### Brief Description of Drawings

FIG. 1 is a system block diagram of the portable antitheft device according to the first embodiment.
FIG. 2 is a connection diagram of the portable antitheft device working in the charging antitheft mode according to the first embodiment.
FIG. 3 is a connection diagram of the portable antitheft device working in the self-lock antitheft mode according to the first embodiment.
FIG. 4 is a connection diagram of the portable antitheft device working in the single-lock antitheft mode according to the first embodiment.
FIG.5 is methodology flow chart for the portable antitheft device when performing the antitheft detection.
FIG. 6 is a schematic diagram of the portable antitheft device detecting antitheft in the self-lock antitheft mode according to the first embodiment.
FIG. 7 is a schematic diagram of the portable antitheft device detecting antitheft in the single-lock antitheft mode according to the first embodiment.
FIG. 8 is a schematic diagram of the portable antitheft device detecting antitheft in the charging antitheft mode according to the first embodiment.
FIG. 9 is a system diagram of the portable antitheft electronic device according to the second embodiment.

### Detailed Description

Preference will be made to the drawings to describe the embodiments in detail and to make the purpose, technical solution and advantages of the invention more clear.

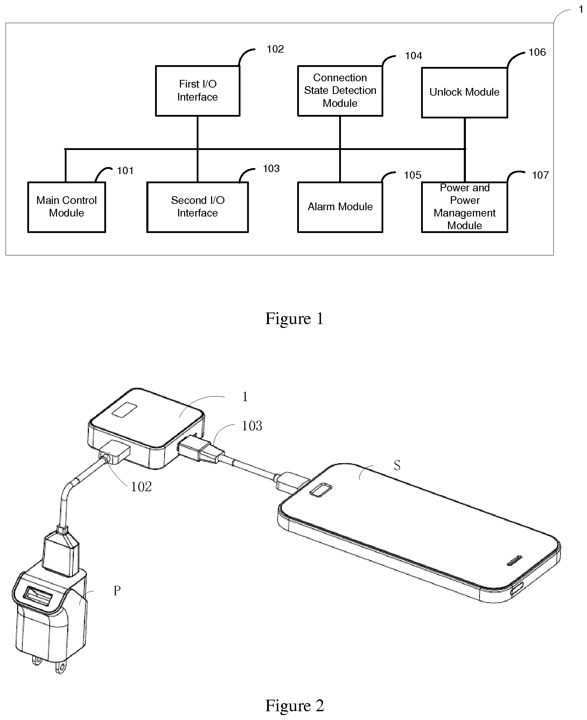

FIG. 1 is a system block diagram of the portable antitheft device according to the first embodiment. Referring to FIG. 1, the portable antitheft device comprises main control module 101, at least one first I/O interface 102, at least one second I/O interface 103, connection state detection module 104, alarm module 105, unlock module 106, power and power management module 107.

The main control module 101 is used to control and manage other modules of the antitheft device.

The at least one first I/O interface 102 and second I/O interface 103 can connect to each other through a connection line to form a self-lock. They can also respectively connect to the electronic interface of the protected item and/or charger. The protected item can be electronic device with electronic interface, and can be antitheft protected by connecting the at least one first I/O interface or the at least one second I/O interface to the electronic interface. The protected item can further be the item with perforation, such as handbag, mobile with lanyard and camera; they can be antitheft protected by connecting the at least one first I/O interface or the second I/O interface to the perforation, such as handle of the handbag and lanyard of the mobile or camera, to form a self-lock loop. The protected item can further be other item which can be locked by the self-lock loop formed by the at least one first I/O interface and second I/O interface of the portable antitheft device, for example, flexible item which can be twined tightly by the self-lock loop and item with concave part where can be twined with the self-lock loop.

The connection state detection module 104 is used for detecting the connection state of the first I/O interface and second I/O interface. The connection state comprises: the first I/O interface connected to each other, connected to an electronic interface and connected to charger.

Alarm module 105 performs an alarm action by the control of main control module 101.

Unlock module 106 is used to judge if the inputted unlock information is correct. If it is correct, sets the state to unlock state, otherwise sets the state to non-unlock state.

Power and power management module 107 is used to supply power and power management to the antitheft device. The power supply mode can be internal battery or external power supply.

Preferably, the main control module 101 can be implemented by CPU, DSP or FPGA; the first I/O interface and second I/O interface can be Mincro USB/ Mni USB/Lightning/ MD device interface/RJ45/RJ11; connection state detection module 104 can be implemented by CPU, DSP or FPGA which are independent from main control module, or share the same CPU with the main control module. The connection state detection module is used to detect whether the first I/O interface and second I/O interface are connected to each other or whether the interfaces are connected to the electronic interfaces of other electronic device and/or charger. The connection state detection module can be implemented in many ways, such as detecting whether the loop electric current or interface voltage exists. The alarm module 105 is used to perform sound alarm signal or light alarm signal and can be implemented by speaker, LED light or other modules which can perform alarm. The unlock module 106 comprises but not limited to keyboard, Bluetooth, NFC, time switch, fingerprint detection and any combination of the modules described above. If it is keyboard unlock module, it can be unlocked by inputting predetermined password; if it is Bluetooth or NFC, it can be predetermined to be unlocked by the other device which has Bluetooth and NFC functions, such as mobile; if it is time switch, it can be unlocked automatically when the predetermined time period expires; if it is fingerprint detection, it can be unlock by inputting predetermined fingerprint information. It can also be any combination of the unlocking modes described above according to the actual requirement. The internal battery of the power and power management module 107 can be rechargeable battery, primary alkaline battery or solar battery.

The antitheft mode of the portable antitheft device comprises at least a combination of one or more of the following modes:
Self-lock antitheft mode: the first I/O interface 102 and the second I/O interface 103 form a self-lock loop by connecting to each other with connection line. It can protect the protected item by locking it to a fixed object, such as a table leg.

Single-lock antitheft mode: the first I/O interface 102 and/or the second I/O interface 103 are connected to the electronic interface of the protected items, such as mobile. In this mode, the first I/O interface 102 and the second I/O interface 103 can be connected to two protected electronic devices so as to protect both simultaneously; any of the interfaces can be connected to one protected electronic device so as to protect only one.

Charging antitheft mode: the first I/O interface 102 and the second I/O interface 103 are connected respectively to the charger and rechargeable electronic devices, so as to protect the electronic device during the charging process.

FIG. 2 shows the connection diagram of the portable antitheft device working in the charging antitheft mode according to the first embodiment. Referring to FIG. 2, the first I/O interface 102 of the portable antitheft device 1 is connected to the external power supply P, that is, the charger; the second I/O interface 103 is connected to the protected electronic device S. In this mode, portable antitheft device 1 is used to protect the electronic device S which is being charged. The power supply current inputted from the external power supply P is directly outputted to the charging interface of the protected electronic device S so that the electronic device S is antitheft protected while the charging process is being performed.

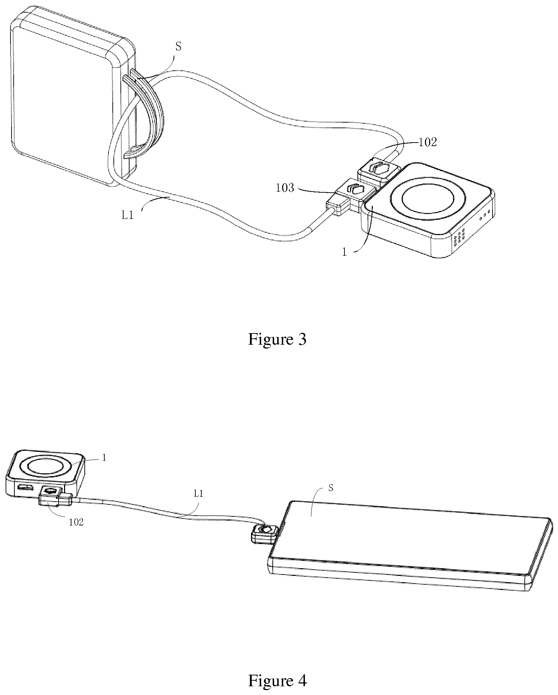

FIG. 3 shows a connection diagram of the portable antitheft device working in the self-lock antitheft mode according to the first embodiment. The first I/O interface 102 of the portable antitheft device 1 is connected to the second I/O interface 103 with connection line L1 to form a self-lock. The connection line L1 passes through the ring part of the protected item S so that the portable antitheft device 1 alarms when the connection line is pulled out or cut off abnormally.

FIG. 4 shows a connection diagram of the portable antitheft device working in the single-lock antitheft mode according to the first embodiment. The first I/O interface 102 of the portable antitheft device 1 is connected to the electronic interface of the protected electronic device S with the connection line L1. The portable antitheft device 1 alarms when the connection line is pulled out or cut off abnormally.

Preferably, the first I/O interface 102 and the second I/O interface can include multiple interfaces respectively, which can be set in pairs or not. When the first I/O interface and the second I/O interface include multiple interfaces, the portable antitheft device can protect multiple items simultaneously and protect multiple rechargeable electronic devices simultaneously when they are being charged.

When the portable antitheft device starts up, the main control module 101 judges the current antitheft mode of the portable antitheft device and detects if the current protected item is safe according to different antitheft modes. The antitheft mode can be set by the mode setting module which is independently installed on the portable antitheft device. For example, when the user has locked the protected item by the portable antitheft device, the antitheft mode can be set by the mode setting module and the mode setting module informs the main control module 101 of the set antitheft mode. The mode setting module can be a switch of any form, such as mechanical switch or remote switch. Furthermore, the mode setting module is not a necessity. When the portable antitheft device starts up, the main control module 101 controls the connection state detection module 104 to detect the first I/O interface and the second I/O interface and judges the antitheft mode according to the detection results. When the antitheft mode is determined to be single-lock antitheft mode, main control module 101 stores the antitheft state of the electronic devices which are connected to the first I/O interface and the second I/O interface, that is, those interfaces which are connected to the electronic devices.

When the portable antitheft device includes multiple first I/O interfaces and second I/O interfaces, it can have different antitheft modes simultaneously. The detection method of the different antitheft modes is similar to the detection method above and will not be described in detail.

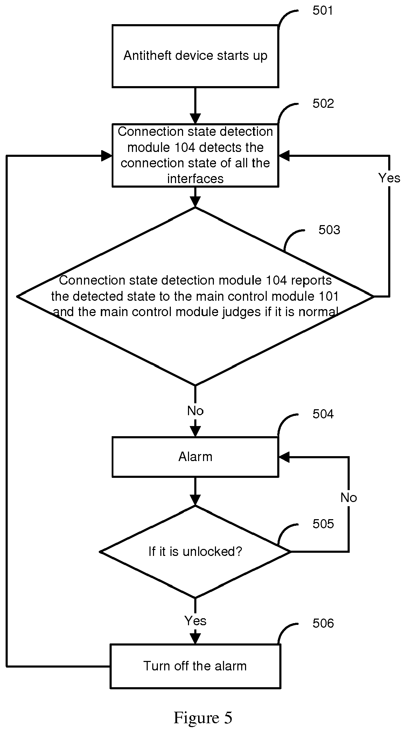

FIG.5 shows a method flow chart for the portable antitheft device when performing the antitheft detection. The antitheft detection method comprises:
Step 501: connecting the portable antitheft device to the protected item and starting up the portable antitheft device;
Step 502: the main control module 101 triggering the connection state detection module 104 to detect the connection state of interfaces;
Step 503: the connection state detection module 104 reporting the detected state to the main control module 101; the main control module 101 judging whether the connection state of the first I/O and the second I/O interface is normal according to the connection state; if it is normal, turns to step 502, otherwise turns to step 504;
Step 504: the main control module 101 triggering the alarm module 105 to perform an alarm action;
Step 505: the main control 101 judging whether the unlock module 106 is in unlock state; if it is, turns to step 506, otherwise turns to step 504;
Step 506: the main control module 101 turning off the alarm module 105 and turning to step 502.

The steps in the method above are now being described in detail given the portable antitheft device of present invention.

In step 501, when the user uses the portable antitheft device, the portable antitheft device starts up when the protected item is being locked on the portable antitheft device. The protected item can be the electronic device with electronic interface and can be antitheft protected by connecting the at least one I/O interface or second I/O interface to the electronic interface. The protected item can also be an item which can be locked by a connection line, for example, an item with ring part, such as handle of a handbag, lanyard of a mobile and camera, a calabash shaped item which can be twined tightly. This kind of item can be antitheft protected by the connection line which passes through the ring part and the connection line connects the at least one first I/O interface and second I/O interface to form a self-lock loop. It can also be antitheft protected by the connection line which twines tightly around the item. The protected item can further be rechargeable device. The recharge interface of the rechargeable device connects to the first I/O interface and the charger connects to the second I/O interface so that the rechargeable device is antitheft protected.

Preferably, one starting up mode of the portable antitheft device is implemented by a switch which is set outside the main part. The other preferred implementation is that the portable antitheft device starts up automatically when user locks the protected item to the portable antitheft device and an electronic signal is detected via interface. For example, when the user chooses the self-lock antitheft mode, the protected item (any item which can be locked by the connection line) is locked to the connection line which connects two interfaces. An electronic signal will be triggered after the two interfaces are connected and the electronic signal can be the start up signal of the portable antitheft device. When the user chooses the single-lock antitheft mode or the charging antitheft mode, an electronic signal is triggered when any of the interfaces is connected to the protected electronic device. The electronic signal can be the start up signal of the portable antitheft device.

Furthermore, a mode setting switch is included in the portable antitheft device. User sets the antitheft mode manually by mode setting switch. Preferably, the mode setting switch can be implemented by wired controller (such as keyboard), wireless remote control device (such as FM remote control, Bluetooth remote control, NFC control or mobile client terminal). The antitheft mode information set by the user can be stored in the cache of the main control module 101. The portable antitheft device can also be implemented without the mode setting switch. When the antitheft device starts up, the main control module can judge the antitheft mode by detecting the connection state of the interfaces and perform the antitheft detection.

In step 502, when the portable antitheft device starts up, the main control module 101 first triggers the connection state detection module 104 to detect the connection state of all the I/O interfaces. Of course, in order to avoid a false alarm due the slow action of the user, the main control module 101 can delay a time period before triggering the connection state decoction module 104 when the portable antitheft device starts up.

Specifically, step 502 further comprises following steps:
Step 5021: main control module 101 judges if there is antitheft mode information set by user in the cache, if no, turns to step 5022, if yes, turns to step 5025;

The antitheft mode information comprises the current mode information and connection state information of all the interfaces. Three different antitheft modes can be indicated by two bits, for example, 00 indicate the self-lock antitheft mode, 01 indicate the single-lock antitheft mode and 11 indicate the charging antitheft mode. The other two bits indicate the connection state of all the interfaces, for example, 00 indicate that no device is connected, 01 indicate that electronic device is connected, 10 indicate that charger is connected and 11 indicate that the other I/O interface is connected.

Step 5022: main control 101 triggers the connection state detection module 104 to detect the connection state of all the interfaces;

Step 5023: connection state detection module 104 reports the detected connection state of the all the interfaces to the main control module 101;

The connection state detection principle under different states is described below according to the figures.

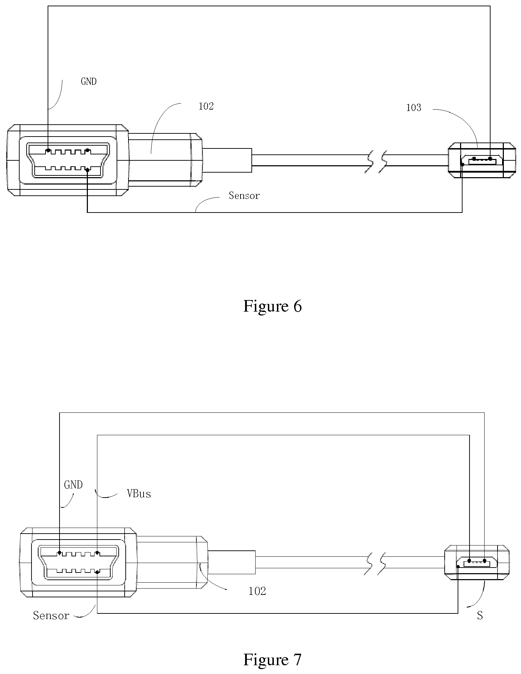

FIG. 6 is a schematic diagram of the portable antitheft device detecting antitheft in the self-lock antitheft mode according to the first embodiment. Referring to FIG. 6, in this embodiment, the first I/O interface 102 is connected to the negative power supply pin and the Sensor pin on the second I/O interface 103 via two connection lines. One is negative power supply GND line and the other is Sensor line. A circuit loop is formed by the lines. The connection detection module 104 detects the states changes of the circuit loop current and reports to the main control module 101. If a circuit loop current is detected, the connection between the first I/O interface 102 and the second I/O interface 103 is considered to be normal.

FIG. 7 is a schematic diagram of the portable antitheft device detecting antitheft in the single-lock antitheft mode according to the first embodiment. In this embodiment, the first I/O interface 102 is connected to the interface of the protected electronic device S. They are connected via three lines: negative power supply line GND, positive power supply line VBus and Sensor line. The negative power supply line GND and the Sensor form a circuit loop. The connection detection module 104 detects the states changes of the circuit loop current and reports to the main control module 101. The positive power supply line VBus can be used to charge the protected electronic device S. If a current is detected, the connection between the first I/O interface 102 and the protected electronic device S is considered to be normal.

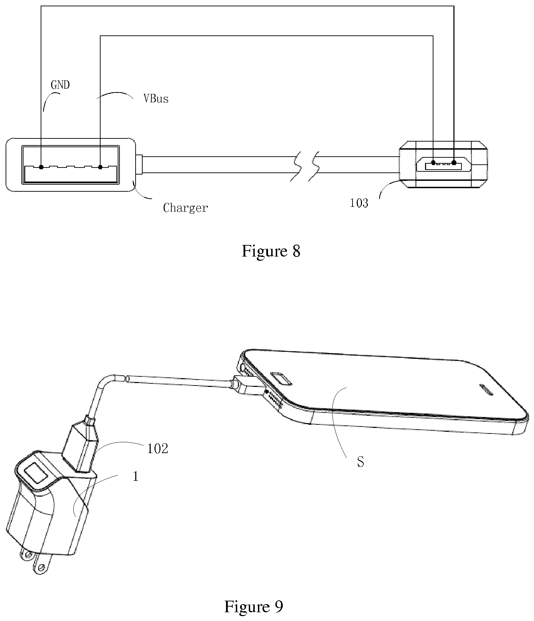

FIG. 8 is a schematic diagram of the portable antitheft device detecting antitheft in the charging antitheft mode according to the first embodiment. Referring to FIG. 8, the connection between the first I/O interface and the protected electronic device is shown in FIG. 7 and will not be described in detail. The second I/O interface 103 is connected to the Charger via two connection lines. One is negative power supply GND line and the other is positive power supply VBus line. The connection detection module 104 detects the voltage changes of the VBus interface on the second I/O interface 103 and reports to the main control module 101. If a voltage on the VBus interface which is between the second I/O interface 103 and the Charger is detected, the connection between the second I/O interface 103 and the Charger is considered to be normal.

Step 5024: main control module 101 judges the current antitheft mode of the portable antitheft device according to the connection state of all the interfaces and stores the antitheft mode information;

For example, when the detected connection state is that the first I/O interface and the second I/O interface are connected to each other, the main control module 101 judges that the portable antitheft device is in self-lock antitheft mode. The antitheft mode information can be stored as "00" (indicate the self-lock antitheft mode), "11" (indicate that the first I/O interface is connected to the other interface), "11" (indicate that the second I/O interface is connected to the other interface);

When the first I/O interface and/or the second I/O interface is connected to the protected electronic device, the main control module 101 judges that the portable antitheft device is in single-lock antitheft mode. The antitheft mode information can be stored as "01" (indicate the single-lock antitheft mode), "01" (indicate that the first I/O interface is connected to the electronic device), "01" (indicate that the second I/O interface is connected to the electronic device);

When the first I/O interface is connected to the electronic device and the second I/O interface is connected to the charger, the main control module 101 judges that the portable antitheft device is in charging antitheft mode. The antitheft mode information can be stored as "11" (indicate the charging antitheft mode), "01" (indicate that the first I/O interface is connected to the electronic device), "11" (indicate that the second I/O interface is connected to the charger);

Step 5025: the main control module 101 triggers the connection state detection module 104 to detect the connection state of all the interfaces according to the antitheft mode information.

Furthermore, if the first I/O interface or the second I/O interface is not connected to any protected item or charger, and not connected to other interface either, the main control module 101 do not trigger the connection state detection module 104 to perform the detection.

In step 503, the main control module 101 judges whether the connection state of all the interfaces is normal according to the antitheft mode information; specifically, the main control module 101 judges if the connection state of corresponding interface and the state stored in antitheft mode information are identical, if yes, the connection state of corresponding interface is considered to be normal, otherwise abnormal.

In step 504, when the main control module 101 judges that any of the interface connection state is abnormal, the alarm module 105 is triggered to send an alarm.

In step 505, after alarm module 105 is triggered by main control module 101 to send an alarm, main control module 101 judges if the unlock module 106 is in unlock state. For example, when the unlock module is implemented by keyboard, the main control module 101 judges if the unlock module receives the password information entered by user; if yes, judges if received password information and stored password information are identical. If identical, the unlock module 106 is considered to be in unlock state, otherwise in non-unlock state and the alarm module 105 continues to be triggered to send an alarm.

In step 506, when the main control module 101 judges that the unlock module 106 is in unlock state, returns to step 502 to restart the antitheft detection.

FIG. 9 is a system diagram of the portable electronic antitheft device according to the second embodiment. Referring to FIG. 9, the portable antitheft device 1 comprises: main control module, at least one first I/O interface, connection state detection module, alarm module, unlock module, power and power management module. The functions of the interfaces and modules above are identical with the functions in the first embodiment. The only difference is that the portable antitheft device in the second embodiment is integrated with the charging module and only works in charging antitheft mode. It can be seen as the second I/O interface and external power supply are integrated inside the portable antitheft device. Besides managing the internal power supply, the power and power management module 107 also manages the charging function of the protected device.

The present invention also provides a method which uses the portable antitheft electronic device in the second embodiment to perform antitheft detection to the electronic device which is being charged. The method comprises:
Step 1: the protected electronic device is connected to the at least one first I/O interface of the portable antitheft device, the portable antitheft device is connected to power supply and started up;
Step 2: the power and power management module charges the protected electronic device;
Step 3: the connection state detection module detects the connection state and charging state of the at least one first I/O interface and reports to the main control module;
Step 4: the main control module judges whether the first I/O interface is normal according to connection state and charging state of the at least one first I/O interface; if yes, turns to step 3, otherwise turns to step 5;
Step 5: main control module triggers the alarm module to send an alarm;
Step 6: main control module judges if the unlock module is in unlock state, if yes, turns to step 7, otherwise turns to step 5;
Step 7: main control module turns off the alarm module and turns to step 3.

In the present embodiment, connection state detection module detects the charging state of the at least one first I/O interface besides the connection state, that is, to detect if the protected electronic device is being charged via the at least one first I/O interface. If the portable antitheft device is unplugged from the power supply, the connection state detection module cannot detect the charging state. When the state is reported to the main control module, the main control module defines that the charging state is abnormal and triggers the alarm module to perform an alarm action. In the present embodiment, the main control module immediately triggers the alarm module to perform an alarm action when the connection state or the charging state of the at least one first I/O interface is abnormal.

In conclusion, the portable antitheft device in present invention has multiple antitheft modes. It can individually protect the protected item in self-lock mode; the protected item can be any item which can be locked tightly by the connection line. In single-lock antitheft mode, it can protect the protected electronic device from theft by connecting to the electronic interface of the electronic device. In charging mode, it can protect the protected electronic device being charged from theft. Furthermore, the portable antitheft device in present invention can protect multiple items and have multiple antitheft modes simultaneously. The portable antitheft device in present invention is easy to carry with full features. It can be applied in many scenarios.

It should be understood that various changes and modifications of the embodiments shown in the drawings and described herein may be made within the spirit and scope of the present invention. Accordingly, it is intended that all matters contained in the above description and shown in the accompanying drawings be interpreted in an illustrative and not in a limiting sense. The invention is limited only as defined in the following claims and the equivalents thereto.

## Claims

1. An antitheft device, comprising:
a main control module, at least one first I/O interface, at least one second I/O interface,
a connection state detection module and an alarm module;
wherein the at least one first I/O interface is connected to a protected electronic device and/or the at least one second I/O interface;
the at least one second I/O interface is connected to a charger for the protected electronic device and/or the at least one first I/O interface;
the connection detection module is used for detecting the connection state of the at least one first I/O interface and second I/O interface and reporting the connection state to the main control module;
the main control module judges whether the state of the at least one first I/O interface and/or second I/O interface is abnormal according to the interface connection state reported by the connection detection module, and sends a trigger signal to the alarm module if the state is abnormal;
the alarm module performs an alarm action after receiving the trigger signal of the main control module.

2. The antitheft device of claim 1, wherein the connection state of the at least one first I/O interface and second I/O interface comprises: whether a current, voltage or their changes exists in the circuit loop where the protected electronic device, charger of the protected electronic device or the other I/O interface is connected.

3. The antitheft device of claim 1-2, wherein the antitheft device has at least one of the following antitheft modes:
self-lock antitheft mode: the at least one first I/O interface and the second I/O interface are connected to each other to form a self-lock to lock the protected item;
single-lock antitheft mode: the at least one first I/O interface and/or the second I/O interface are connected to the protected electronic device to protect the protected electronic device;
charging antitheft mode: the at least one first I/O interface and the second I/O interface are connected to the protected electronic device and the charger of the protected electronic device respectively to protect the protected electronic device which is being charged.

4. The antitheft device of claim 3, wherein the main control module judges the current antitheft mode according to the connection state of the at least first I/O interface and the second I/O interface.

5. The antitheft device of claim 3, wherein the antitheft device further comprises a mode setting module which is used to set the current antitheft mode of the antitheft device.

6. The antitheft device of claim 1, wherein the antitheft device further comprises an unlock module, the unlock module judges if the inputted unlock information is correct; if correct, sets its state to unlock state.

7. The antitheft device of claim 6, wherein the main control module judges if the unlock module is in unlock state after sending a trigger signal to the alarm module; if the unlock module is in unlock state, turns off the alarm action of the alarm module, otherwise continues to alarm.

8. The antitheft device of claim 1, wherein the antitheft device further comprises a power and power management module, which is used to supply power to the antitheft device and/or the protected electronic device.

9. The antitheft device of claim 6, wherein the main control module is one of CPU, DSP or FPGA; the alarm module is one or any combination of sound alarm module and light alarm module; the unlock module is one or any combination of keyboard, Bluetooth, NFC, time switch and fingerprint detection alarm module.

10. The antitheft device of claim 1, wherein the antitheft device comprises at least two first I/O interface and/or at least two second I/O interface which are respectively connected to each other or connected to different protected electronic devices and/or the charger of the protected electronic device.

11. The antitheft device of claim 2, wherein the circuit loop comprises:
a circuit loop formed by the negative power supply line and the sensor line between the at least one first I/O interface and the at least one second I/O interface;
a circuit loop formed by the negative power supply line and the sensor line between the at least one first I/O interface and the protected electronic device;
a circuit loop formed by the negative power supply line and the positive power supply line between the at least one second I/O interface and charger of the protected electronic device.

12. An antitheft device, comprising:
a main control module, at least one first I/O interface, a connection state detection module, an alarm module and a power and power management module;
wherein the at least one first I/O interface is connected to a protected electronic device;
the connection detection module is used for detecting the connection state and the charging state of the at least one first I/O interface and reporting the connection state and the charging state to the main control module;
the main control module judges whether the state of the at least one first I/O interface is abnormal according to the interface connection state and charging state reported by the connection detection module, and sends a trigger signal to the alarm module if the state is abnormal;
the alarm module performs an alarm action after receiving the trigger signal of the main control module;
the power and power management module is connected to an external power supply and used for supplying power to the antitheft device and charging the protected electronic device.

13. The antitheft device of claim 12, wherein the connection state of the at least one first I/O interface comprises: whether a current, voltage or their change exists in the circuit loop where the protected electronic device is connected.

14. The antitheft device of claim 12, wherein the antitheft device further comprises an unlock module, the unlock module judges if the inputted unlock information is correct; if correct, sets its state to unlock state.

15. The antitheft device of claim 14, wherein the main control module judges if the unlock module is in unlock state after sending a trigger signal to the alarm module; if the unlock module is in unlock state, turns off the alarm action of the alarm module, otherwise continues to alarm.

16. The antitheft device of claim 12, wherein the antitheft device comprises multiple first I/O interfaces which are respectively connected to different protected electronic devices.

17. An antitheft method using an antitheft device, the antitheft device comprises a main control module, at least one first I/O interface, at least one second I/O interface, a connection state detection module, an alarm module and an unlock module, the method comprising:
step 1: the protected item and the antitheft device are connected and the antitheft device starts up;
step 2: the connection state detection module detects the connection states of all the I/O interfaces and reports the connection states to the main control module;
step 3: the main control module judges whether the connection state of the first I/O interface and the second I/O interface is normal according to the connection states of all the I/O interfaces; if yes, turns to step 2, otherwise turns to step 4;
step 4: the main control module triggers the alarm module to perform an alarm action;
step 5: the main control module judges if the unlock module is in unlock mode, if yes, turns to step 6, otherwise turns to step 4;
step 6: the main control module turns off the alarm action of the alarm module and turns to step 2.

18. The antitheft method of claim 17, wherein the protected item is electronic device with electronic interface, and the electronic interface of the electronic device is connected to the first I/O interface or the second I/O interface of the antitheft device in step 1.

19. The antitheft method of claim 17, wherein the protected item is the item which can be locked tightly by connection line, and the protected item is locked in a self-lock loop formed by the first I/O interface and the second I/O interface of the antitheft device through connection line in step 1.

20. The antitheft method of claim 17, wherein the protected item is rechargeable device; the charging interface of the rechargeable device is connected to the first I/O interface of the antitheft device and the charger is connected to the second I/O interface.

21. An antitheft method which uses an antitheft device to protect the protected electronic device which is being charged, the antitheft device comprises a main control module, at least one first I/O interface, a connection state detection module, a power and power management module, an alarm module and an unlock module, the method comprising:
step 1: the protected electronic device and the at least one first I/O interface of the antitheft device are connected, the antitheft device is connected to the power supply and starts up;
step 2: the power and power management module charges the protected electronic device;
step 3: the connection state detection module detects the connection state and charging state of the at least one first I/O interface and reports to the main control module;
step 4: the main control module judges whether the state of the at least one first I/O interface is normal according to the connection state and the charging state of the at least one first I/O interface; if yes, turns to step 3, otherwise turns to step 5;
step 5: the main control module triggers the alarm module to perform an alarm action;
step 6: the main control module judges if the unlock module is in unlock mode, if yes, turns to step 7, otherwise turns to step 5;
step 7: the main control module turns off the alarm module and turns to step 3.
